# EUROPÄISCHE PATENTSCHRIFT

(11) **EP 3 286 443 B1**
(45) Veröffentlichungstag und Bekanntmachung des Hinweises auf die Patenterteilung: **13.03.2019**
(21) Anmeldenummer: 16726107.2
(22) Anmeldetag: 01.06.2016
(51) Int. Cl.: F16C 32/04, B63H 5/125

(54) **FAHRMASCHINE FÜR EIN GEWÄSSER MIT EINEM LAGER**
PROPULSIVE MACHINE FOR A BODY OF WATER HAVING A BEARING
MACHINE PROPULSIVE POUR UN ESPACE D'EAU, COMPRENANT UN PALIER

(30) Priorität: 03.07.2015 DE 102015212501
(43) Veröffentlichungstag der Anmeldung: 28.02.2018
(73) Patentinhaber: Siemens Aktiengesellschaft, 80333 München (DE)
(72) Erfinder: ARNOLDT, Jens, 22177 Hamburg (DE); DEEG, Markus, 21680 Stade (DE); GRAEFF, Sven-Olaf, 23968 Wismar (DE); HELLEMANN, Oscar, 21629 Neu Wulmstorf (DE); STUTZ, Sophie Juliane, 22111 Hamburg (DE)
(86) Internationale Anmeldenummer: PCT/EP2016/062321
(87) Internationale Veröffentlichungsnummer: WO 2017/005414

(56) Entgegenhaltungen:
- WO-A1-00/37308
- DE-U1- 9 403 202
- JP-A- 2003 034 292
- JP-A- 2004 142 700
- JP-A- 2006 069 369

## Beschreibung

Die Erfindung betrifft eine Fahrmaschine für ein Gewässer mit einer drehbaren Welle, welche insbesondere eine Antriebswelle für zumindest einen Propeller ist.

Beispiele für eine Fahrmaschine für ein Gewässer sind Containerschiffe, Passagierschiffe, Pod-Antriebe, Ruderpropeller, Frachter, U-Boote, etc. Gewässer sind beispielsweise Meere, Flüsse, Seen, usw. Derartige Fahrmaschinen für ein Gewässer, also insbesondere U-Boote, Schiffe und Boote sind mittels eines Propellers antreibbar, wobei der Propeller mit einer Antriebswelle mechanisch gekoppelt ist. Unter Fahrmaschine für ein Gewässer kann also ein Schwimmkörper, wie ein Schiff oder ein U-Boot, wie auch ein Teil davon verstanden werden. Dies ist beispielsweise eine Antriebsgondel.

Die EP 1 972 545 A1 zeigt beispielsweise eine Fahrmaschine für ein Gewässer, die als Pod-Antrieb für ein Schiff dient. Die Fahrmaschine für ein Gewässer weist insbesondere ein Unterwassergehäuse, das an dem Rumpf des Schiffes angeordnet ist, einen Propeller, der außerhalb des Gehäuses angeordnet ist, und eine Propellerwelle (also eine Antriebswelle), auf der der Propeller sitzt auf. Die Propellerwelle ist in dem Gehäuse gelagert. Das Gehäuse weist eine oder eine Vielzahl von Durchtrittsöffnungen auf, über welche die Propellerwelle aus dem Gehäuse heraus geführt ist. Innerhalb des Gehäuses ist beispielsweise ein Getriebe in Form eines Planetengetriebes angeordnet, das mit der Propellerwelle gekoppelt ist und ein Getriebegehäuse aufweist. Der Propeller kann auch direkt, also ohne Getriebe, angetrieben sein. Eine Wellendichtung dichtet die Durchtrittsöffnung gegen einen Eintritt von Flüssigkeit in das Gehäuse ab. Das Getriebe ist dabei insbesondere von der Wellendichtung beabstandet. Der Antrieb der Propellerwelle bzw. des Propellers über das gegebenenfalls verwendete Getriebe erfolgt durch eine Antriebsmotoreneinrichtung, die beispielsweise einen elektrischen Motor enthält. Dieser elektrische Motor ist bei einem Pod-Antrieb im Inneren des Gehäuses angeordnet. Ist der elektrische Motor außerhalb des Gehäuses im Schiffsrumpf angeordnet, so handelt es sich um einen Ruderpropeller. Bei einer Anordnung im Schiffsrumpf erfolgt der Antrieb der Propellerwelle bzw. des Propellers über eine Vertikalwelle, die von dem Schiffsrumpf in das Gehäuse geführt ist, und einem zwischen dem Getriebe und der Vertikalwelle angeordneten Tellerrad-Kegelrad-Getriebe. Ausführungen ohne Getriebe sind auch möglich.
Die Propellerwellenlagerung, also die Lagerung der Antriebswelle für eine Fahrmaschine für ein Gewässer wie ein Wasserfahrzeug, beispielsweise für einen azimutierenden elektrischen Antrieb, ist durch verschiedene Wälzlager, Gleitlager und/oder WälzGleitlageranordnungen und -ausführungen ausgestaltbar.

Die WO 00/37308 A offenbart eine Fahrmaschine für ein Gewässer mit einem Propeller und einer Welle, die mit dem Propeller gekoppelt ist, wobei ein Lager zur Lagerung der Welle ein Magnetlager ist, wobei die Lagerwirkung verstärkbar ist, wobei zur Lagerung der Welle ein erstes Lager und ein zweites Lager vorgesehen ist, wobei das erste Lager Axialkräfte aufnimmt, wobei das zweite Lager Radialkräfte aufnimmt. Eine Aufgabe der Erfindung ist es die Lagerung der Antriebswelle zu verbessern. Durch eine verbesserte Lagerung lässt sich z.B. die Effizienz des Antriebssystems verbessern und/oder die Verlässlichkeit und/oder die Betriebsstundenzahl und/oder die Wartungsintervalle.
Eine Lösung der Aufgabe ergibt sich bei einer Fahrmaschine für ein Gewässer nach Anspruch 1. Ausgestaltungen der Fahrmaschine für ein Gewässer ergeben sich nach den Ansprüchen 2 bis 13.
Eine Fahrmaschine für ein Gewässer, wie z.B. ein Containerschiff, ein Passagierschiffe, ein Pod-Antrieb, ein Frachter, ein U-Boot, ein Kompressor, weist einen Propeller und eine Welle auf. Die Fahrmaschine kann einen oder eine Vielzahl von Propellern aufweisen. Die Fahrmaschine kann auch eine oder eine Vielzahl von Wellen aufweisen. Die Welle ist insbesondere eine Antriebswelle, welche direkt ohne ein Getriebe oder indirekt mittels eines Getriebes eine elektrische Maschine, wie z.B. einen elektrischen Motor oder einen elektrischen Generator, mit dem Propeller koppelt. Die Kopplung ist insbesondere mechanisch, wobei die Welle insbesondere innerhalb eines Gehäuses, wie z.B. einer Gondel montiert am Schiffsrumpfes (Pod-Antrieb), gelagert ist. Das Lager zur Lagerung der Welle ist als ein Magnetlager ausgeführt.

Ein Vorteil der magnetischen Ausführung eines Lagers (Magnetlager) kann darin bestehen, dass es bezüglich mechanischer Komponenten verschleißfrei ausführbar ist. Eine Verschleißfreiheit ist beispielsweise bei Wälzlagern nicht gegeben.

In einer Ausgestaltung der Fahrmaschine für ein Gewässer ergibt sich die Möglichkeit das Lager bzw. die Lager abhängig von den Erfordernissen, insbesondere des Betriebes eines Wasserfahrzeuges (Schiff, U-Boot, etc.), in ihrer Lagerwirkung zu verstärken, was insbesondere durch eine Hinzuschaltung weiterer Magnetlager möglich ist. So kann abhängig von der Belastung (insbesondere der Welle) ein Magnetlager aktiv sein oder eine Vielzahl von Magnetlagern. Zudem ist es auch möglich ein Magnetlager abhängig von der Belastung mit unterschiedlichen Stromstärken und/oder Spannungen zu beaufschlagen.

Durch die Verwendung eines Magnetlagers ist auch ein reibungsarmer Betrieb der Lagerung der Welle möglich. Der reibungsärmere Betrieb wirkt sich verlustreduzierend aus. Zudem ist es möglich die abzuführende Lagerverlustwärme zu reduzieren.

Das Magnetlager ist derart ausbildbar, dass keine Schmiermedien für die Lagerung benötigt werden, wodurch keine Schmiermedien in die Umwelt gelangen können. Gegebenenfalls ist es angezeigt für ein Fanglager ein Schmiermedium wie ein Fett oder ein Öl zu verwenden.

Bei dem Magnetlager kann es auch vorteilhaft sein, dass durch dessen Einsatz und die daraus resultierende magnetische Lagerung geringere Vibrationen auftreten.

In einer Ausgestaltung des Magnetlagers ist es ein aktives magnetisches Lager. Bei dem aktiven magnetischen Lager ist es möglich die Bestromung der Wicklungen des Magnetlagers zu regeln. Mittels des aktiven magnetischen Lagers kann beispielsweise eine Entkopplung der Schwingungen der Welle, insbesondere der Antriebswelle, also insbesondere der Propellerwelle, erreicht werden. An der Propellerwelle ist der Propeller mechanisch steif angekoppelt.

In einer Ausgestaltung der Fahrmaschine für ein Gewässer weist diese zur Lagerung der Welle zumindest ein Magnetlager und zumindest ein mechanisches Lager auf. Das mechanische Lager ist beispielsweise ein Kugellager, ein Tonnenlager, ein Nadellager, etc. Durch die Verwendung zweier Lagertypen (mechanisches Lager und Magnetlager) ist es möglich deren jeweilige Vorteile zu kombinieren. Vorteile bzw. Nachteile können beispielsweise in folgenden Bereichen liegen: Preis, Platzbedarf, Belastbarkeit, Temperaturbeständigkeit, Notlaufeigenschaften, Lebensdauer, Lagerströme, usw.

In einer Ausgestaltung der Fahrmaschine für ein Gewässer weist diese zur Lagerung der Welle ein erstes Lager und ein zweites Lager auf. Damit kann beispielsweise hohen Belastungen und/oder unterschiedlichen Belastungen Rechnung getragen werden.

In einer Ausgestaltung der Fahrmaschine für ein Gewässer ist das erste Lager ausgeführt um Axialkräfte aufzunehmen. Das erste Lager ist folglich befähigt größere Axialkräfte als Radialkräfte aufzunehmen. Dabei richtet sich die Orientierung der Kräfte in axialer Richtung bzw. in radialer Richtung nach der Welle.

In einer Ausgestaltung der Fahrmaschine für ein Gewässer ist das zweite Lager ausgeführt um Radialkräfte aufzunehmen. Das zweite Lager ist folglich befähigt größere Radialkräfte als Axialkräfte aufzunehmen. Auch dabei richtet sich die Orientierung der Kräfte in axialer Richtung bzw. in radialer Richtung nach der Welle.

Durch eine Kombination von Lagern, welche durch ihren unterschiedlichen Aufbau überwiegend Axial- und/oder Radialkräfte aufnehmen können, kann eine für den jeweiligen Anwendungsfall optimierte Lagerkombination erreicht werden. Auch eine Kombination von drei oder mehr Lagern ist möglich.

Auch eine Propellerwellenlagerung von azimutierenden elektrischen Antrieben für Wasserfahrzeuge (Pod-Antrieb) ist durch eine magnetische Lagerung optimierbar. Dies gelingt beispielsweise auch durch den Einsatz von Supraleitern. Ein mit Supraleiter ausgeführtes Magnetlager kann besonders hohe Kräfte aufnehmen und ermöglicht auch einen kompakten Aufbau. Azimutierende elektrische Antriebe sind bei Fahrmaschinen für ein Gewässer mit einer Antriebseinrichtung für eine schwimmende und/oder tauchende Einrichtung, wie z.B. ein Schiff oder eine Offshore-Plattform einsetzbar, wobei die Fahrmaschine für ein Gewässer, insbesondere horizontal und/oder vertikal bzw. insbesondere um ihre räumlich freie Achse drehbar, an einem Rumpf der schwimmenden oder tauchenden Einrichtung befestigt ist.

Bei dem azimutierenden elektrischen Antrieb kann sowohl die Radiallagerung als auch die Axiallagerung der Propellerwelle und/oder des Motors als Magnetlager ausgeführt sein. Es sind aber auch Kombinationen von Wälzlagern (Radiallager oder Axiallager) mit Magnetlagern (Axiallager oder Radiallager) möglich.

In einer Ausgestaltung der Fahrmaschine für ein Gewässer weist ein Getriebe zumindest ein Magnetlager auf. Mittels des Getriebes ist der Propeller mit dem Antrieb (z.B. eine elektrische Maschine) gekoppelt. Das Getriebe ist derart ausbildbar, dass beim Betrieb der Fahrmaschine für ein Gewässer die Drehzahl der elektrischen Maschine größer ist als die Drehzahl der Propellerwelle (z.B. 4 bis 5faches der Propellerdrehzahl). Als elektrische Maschine kann dann eine schnell laufende Maschine eingesetzt werden, die kleinere Abmessungen als eine mit der Propellerdrehzahl laufende Maschine hat. Dies gilt insbesondere bei einer Verwendung der Fahrmaschine für ein Gewässer als eine Antriebseinrichtung für eine schwimmende oder tauchende Einrichtung wie ein Unterseeboot (U-Boot). Die elektrische Maschine kann dabei als ein elektrischer Motor ausgebildet sein, der den Propeller antreibt. Als elektrische Motoren sind unterschiedlichste Elektromotoren wie z.B. Asynchron oder Synchronmotoren möglich, die durch Permanentmagnete oder ein Wicklungssystem erregt sein können, wobei diese auch in HTS (Hochtemperatur-Supraleiter)-Technik ausgeführt sein können. Die elektrische Maschine kann aber auch als ein Generator ausgebildet sein, der von dem Propeller angetrieben wird.

In einer Ausgestaltung der Fahrmaschine für ein Gewässer ist die Welle mit einer elektrischen Maschine gekoppelt. Elektrische Maschinen sind im Vergleich zu Verbrennungskraftmaschinen wie einem Dieselmotor einfacher und exakter regelbar.

In einer Ausgestaltung der Fahrmaschine für ein Gewässer ist das Getriebe mit der elektrischen Maschine und einem Propeller gekoppelt. Dabei kann das Magnetlager Kräfte aufnehmen, welche von dem Getriebe und/oder von der elektrischen Maschine herrühren.

In einer Ausgestaltung der Fahrmaschine für ein Gewässer ist das Magnetlager und/oder ein Stromrichter des Magnetlagers gekühlt. Mittels des oder der Stromrichter sind Spulen des Magnetlagers bestrombar. Zur Steigerung der Effizienz kann einzeln oder in Kombination eine Kühlung von Stromrichter und Magnetlager vorgesehen sein.

In einer Ausgestaltung der Fahrmaschine für ein Gewässer ist die Kühlung des Magnetlagers und/oder ein Stromrichter des Magnetlagers thermisch mit der Kühlung der elektrischen Maschine und/oder mit der Kühlung des Stromrichters für die elektrische Maschine gekoppelt. Durch gemeinsame Kühlkreisläufe kann der von der Kühlung beanspruchte Bauraum reduziert werden.

In einer Ausgestaltung der Fahrmaschine für ein Gewässer weist das Magnetlager einen Supraleiter auf. Weist auch die elektrische Maschine einen Supraleiter auf, so kann durch eine gemeinsame Kühlung der Supraleiter von elektrischer Maschine und Magnetlager eine effiziente Kühlung realisiert werden.

In einer Ausgestaltung der Fahrmaschine für ein Gewässer befindet sich die elektrische Maschine und das Magnetlager in einem Gehäuse, wobei das Gehäuse einen Gondelantrieb betrifft. Der Gondelantrieb ist als eine azimutierende elektrische Antriebseinheit ausbildbar.

In einer Ausgestaltung der Fahrmaschine für ein Gewässer ist das Gehäuse in welchem sich die elektrische Maschine und das Magnetlager befinden ein Druckkörper, wie dieser bei Unterseebooten benötigt wird.

Die Erfindung sowie weitere Ausgestaltungen der Erfindung werden im Folgenden anhand von Ausführungsbeispielen in den Figuren näher erläutert; dabei zeigt:
- FIG 1: eine Fahrmaschine für ein Gewässer mit einer magnetisch gelagerten Welle;
- FIG 2: eine Fahrmaschine für ein Gewässer mit einem gekühlten magnetischen Lager;
- FIG 3: eine Fahrmaschine für ein Gewässer mit drei Lagern zur Lagerung einer Welle;
- FIG 4: ein Magnetlager in einem Antriebsgehäuse;
- FIG 5: ein Magnetlager für eine Welle;
- FIG 6: eine erste Kombination von Lagern für eine Welle;
- FIG 7: eine zweite Kombination von Lagern für eine Welle; und
- FIG 8: eine dritte Kombination von Lagern für eine Welle.

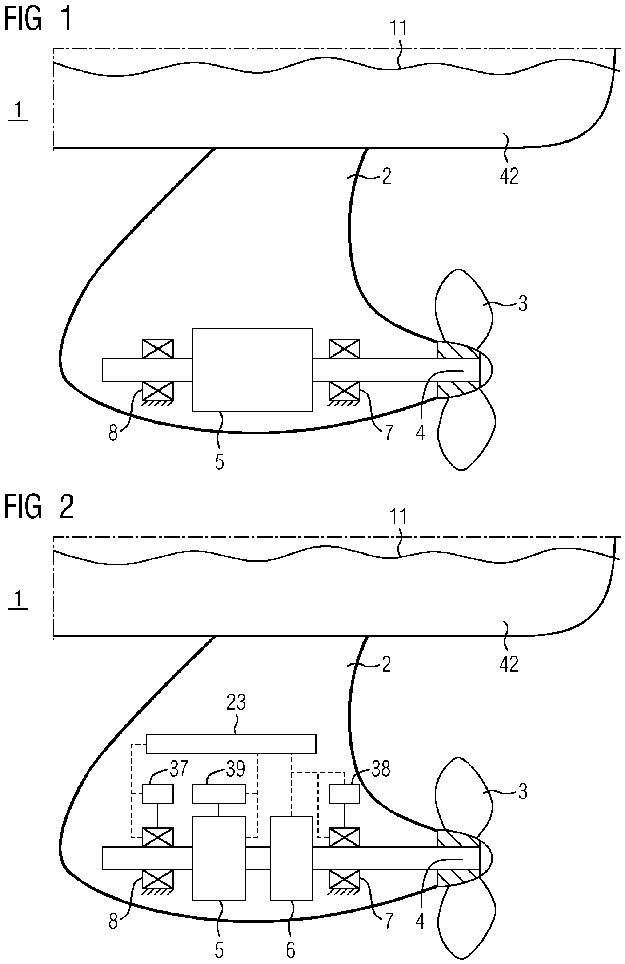

Die Darstellung nach FIG 1 zeigt in vereinfachter und schematischer Darstellung eine Fahrmaschine für ein Gewässer 1 mit einem Schiffsrumpf 42 und angedeuteter Wasserlinie 11. Die Fahrmaschine für ein Gewässer 1 weist einen Gondelantrieb auf. In einem Gehäuse 2 des Gondelantriebes befindet sich eine elektrische Maschine 5, mittels derer über eine Welle 4 ein Propeller 3 antreibbar ist. Die Welle 4 ist durch ein antriebsseitiges Lager 7 und ein bedienseitiges Lager 8 innerhalb des Gehäuses 2 gelagert. Das antriebsseitige Lager 7 und oder das bedienseitige Lager 8 sind als Magnetlager ausgeführt. Durch den Einsatz von Magnetlagern können Reibungsverluste reduziert werden.

Die Darstellung nach FIG 2 zeigt eine Fahrmaschine für ein Gewässer 1 ähnlich der nach FIG 1. Die Fahrmaschine für ein Gewässer 1 weist zwischen der elektrischen Maschine 5 und dem Propeller 3 ein Getriebe 6 auf. Das antriebsseitige magnetische Lager 7 wird über einen Stromrichter 38 gespeist. Das bedienseitige magnetische Lager 8 wird über einen Stromrichter 37 gespeist. Die elektrische Maschine 5 wird über einen Stromrichter 39 gespeist. Zur Kühlung elektrischer Betriebsmittel wie z.B. Stromrichter ist eine Kühleinrichtung 23 vorgesehen. Mittels der Kühleinrichtung 23 lassen sich die Lager 7 und 8, die Stromrichter 37, 38 und 39 sowie die elektrische Maschine 5 kühlen, was durch gestrichelte Linien angedeutet ist. Zusätzlich kann auch das Getriebe mittels der Kühleinrichtung 23 gekühlt werden.

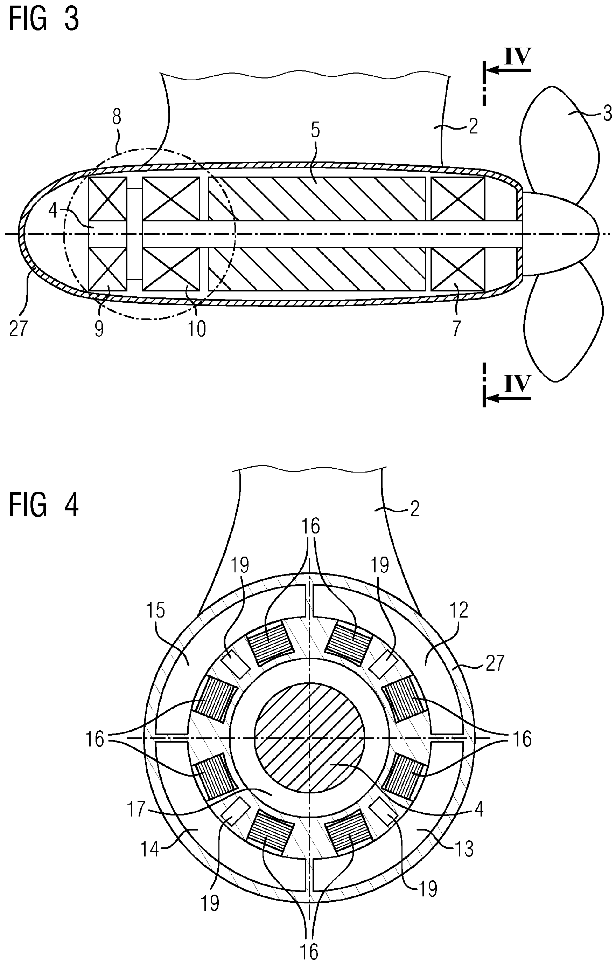

Die Darstellung nach FIG 3 zeigt eine Fahrmaschine für ein Gewässer mit drei Lagern 7, 9 und 10 zur Lagerung einer Welle 4. Die bedienseitige Lagerung 8 der Welle ergibt sich durch die Lager 9 und 10. Alle Lager 7, 9 und 10, sowie die elektrische Maschine 5 befinden sich innerhalb eines Antriebsgehäuses 27 des Gondelantriebs, wobei das Gehäuse 2 des Gondelantriebs auch das Antriebsgehäuse 27 umfasst. Das Antriebsgehäuse 27 ist über einen Schaft am Rumpf eines Schiffes (in dieser Figur nicht dargestellt) angebracht. Bedienseitig sind ein erstes Lager 9 und ein zweites Lager 10 vorgesehen, wobei das erste Lager 9 zur Aufnahme von axialen Kräften vorgesehen ist und das zweite Lager 10 zur Aufnahme von radialen Kräften vorgesehen ist.

Die Darstellung nach FIG 4 zeigt einen Querschnitt durch die Gondel nach FIG 3. Durch den Querschnitt wird der Aufbau des Magnetlagers 7 verdeutlicht. Das Magnetlager 7 weist ein erstes Magnetlagersegment 12, ein zweites Magnetlagersegment 13, ein drittes Magnetlagersegment 14 und ein viertes Magnetlagersegment 15 auf. Die vier Magnetlagersegmente 12 bis 15 sind kreisförmig angeordnet. Die Magnetlagersegmente 12 bis 15 weisen Magnetlagerspulen 16 zur Erzeugung eines magnetischen Feldes auf. Zur Regelung und/oder Steuerung sind Sensoren 19 einsetzbar. Im Bereich der Sensoren 19 können zur Kühlung der Spulen auch Kühlkanäle vorgesehen sein.

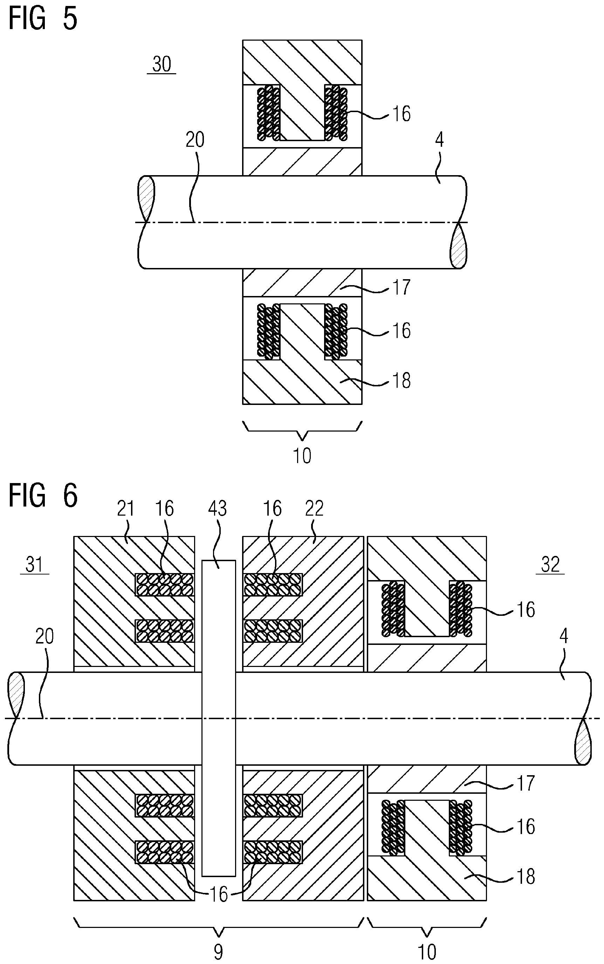

Die Darstellung nach FIG 5 zeigt schematisch das zweite Lager 10 gemäß FIG 3 ausgeführt als Magnetlager 30. Das Magnetlager 9 weist als Radial-Magnetlager ein Passivteil 17 und ein Aktivteil 18 auf. Das Passivteil 17 sitzt auf der Welle 4, welche eine Achse 20 hat. Das Aktivteil 18 weist die Magnetlagerspule 16 auf.

Die Darstellung nach FIG 6 zeigt schematisch das erste Lager 9 und das zweite Lager 10 gemäß FIG 3. Beide Lager sind als Magnetlager 31 und 32 ausgeführt und bilden ein Radial-Axial-Magnetlager. Das Magnetlager 32 entspricht dem Magnetlager 30 aus Figur 5. Das Magnetlager 31 ist auf der Welle 4 positioniert und weist ein erstes Aktivteil 21 und ein zweites Aktivteil 22 auf. Diese Aktivteile 21 und 22 weisen Magnetlagerspulen 16 auf und stehen in Wirkbeziehung zum Passivteil 43 des Magnetlagers 31.

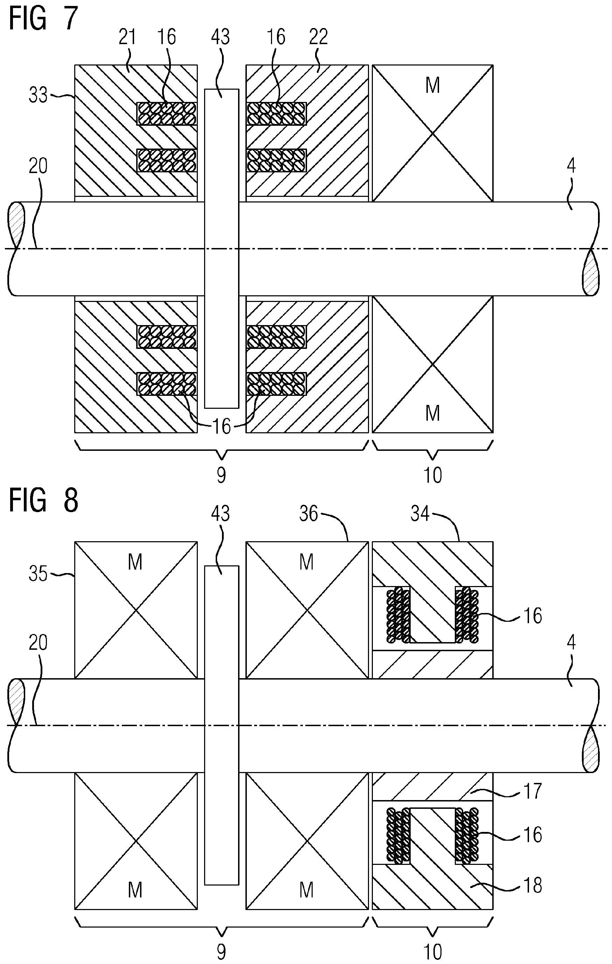

Die Darstellung nach FIG 7 zeigt schematisch das erste Lager 9 und das zweite Lager 10 gemäß FIG 3, wobei im Unterschied zu FIG 6 das zweite Lager 10 nach FIG 7 ein mechanisches Lager ist (z.B. ein Wälzlager), was durch ein "M" symbolisiert ist. Der Aufbau nach FIG 7 zeigt also ein Axial-Magnetlager und beispielsweise ein Radial-Wälzlager.

Die Darstellung nach FIG 8 zeigt schematisch das erste Lager 9 und das zweite Lager 10 gemäß FIG 3, wobei im Unterschied zu FIG 6 das erste Lager 10 nach FIG 8 ein mechanisches Lager ist (z.B. ein Wälzlager). Das Element 43 kann entweder entfallen (hier nicht dargestellt) oder beispielsweise als Positionierhilfe für die mechanischen Lager 35 und 36 dienen, welche insbesondere zur Aufnahme axialer Kräfte vorgesehen sind. Der Aufbau nach FIG 8 zeigt also beispielsweise Axial-Wälzlager und ein Radial-Magnetlager.

## Patentansprüche

1. Fahrmaschine für ein Gewässer (1) mit einem Propeller (3) und einer Welle (4), die mit dem Propeller (3) gekoppelt ist, wobei der Propeller (3) mittels einer elektrischen Maschine (5) in einem Gehäuse (2) antreibbar ist, wobei die Welle (4) innerhalb des Gehäuses (2) eines POD-Antriebs (27) gelagert ist, wobei ein Lager (7,8) zur Lagerung der Welle (4) ein Magnetlager (30,31,32,33,34) ist, wobei die Lagerwirkung verstärkbar ist, wobei zur Lagerung der Welle (4) ein erstes Lager (9) und ein zweites Lager (10) vorgesehen ist, wobei das erste Lager (9) Axialkräfte aufnimmt, wobei das zweite Lager (10) Radialkräfte aufnimmt.

2. Fahrmaschine für ein Gewässer (1) nach Anspruch 1,
**dadurch gekennzeichnet , dass** zur Verstärkung der Lagerwirkung weitere zuschaltbare Magnetlager (30, 31,32,33,34) vorgesehen sind.

3. Fahrmaschine für ein Gewässer (1) nach Anspruch 1 oder 2,
**dadurch gekennzeichnet , dass** das Magnetlager (30,31,32,33,34) abhängig von der Belastung mit unterschiedlichen Stromstärken und/oder Spannungen beaufschlagbar ist.

4. Fahrmaschine für ein Gewässer (1) nach einem der Ansprüche 1 bis 3, **dadurch gekennzeichnet, dass** das Magnetlager (30,31,32,33,34) ein aktives Lager ist, welches regelbar ist und Schwingungen der Antriebswelle entkoppelt.

5. Fahrmaschine für ein Gewässer (1) nach einem der Ansprüche 1 bis 4, welche zur Lagerung der Welle (4) das Magnetlager (30,31,32,33,34) und ein mechanisches Lager (35) aufweist.

6. Fahrmaschine für ein Gewässer (1) nach einem der Ansprüche 1 bis 5, wobei ein Getriebe (6) mittels zumindest eines Magnetlagers (30,31,32,33,34) gelagert ist.

7. Fahrmaschine für ein Gewässer (1) nach einem der Ansprüche 1 bis 6, wobei die Welle (4) mit einer elektrischen Maschine (11) gekoppelt ist.

8. Fahrmaschine für ein Gewässer (1) nach Anspruch 6 oder 7, wobei das Getriebe (6) mit der elektrischen Maschine (11) gekoppelt ist.

9. Fahrmaschine für ein Gewässer (1) nach einem der Ansprüche 1 bis 8, wobei das Magnetlager (30,31,32,33,34) und/oder ein Stromrichter (24,25,26) des Magnetlagers gekühlt ist.

10. Fahrmaschine für ein Gewässer (1) nach Anspruch 9, wobei die Kühlung des Magnetlagers (30,31,32,33,34) und/oder ein Stromrichter (24,25,26) des Magnetlagers thermisch mit der Kühlung der elektrischen Maschine (11) und/oder mit der Kühlung des Stromrichters (24,25,26) für die elektrische Maschine (11) gekoppelt ist.

11. Fahrmaschine für ein Gewässer (1) nach einem der Ansprüche 1 bis 10, wobei das Magnetlager (30,31,32,33,34) einen Supraleiter (29) aufweist.

12. Fahrmaschine für ein Gewässer (1) nach einem der Ansprüche 1 bis 11, wobei das Gehäuse (27) ein Gondelantrieb (40) ist.

13. Fahrmaschine für ein Gewässer (1) nach einem der Ansprüche 1 bis 11, wobei das Gehäuse (27) ein Druckkörper (41) ist.

## Claims

1. Propulsive machine for a body of water (1) having a propeller (3) and a shaft (4) which is coupled to the propeller (3), wherein the propeller (3) can be driven by means of an electric machine (5) in a housing (2), wherein the shaft (4) is mounted inside the housing (2) of a pod drive (27), wherein a bearing (7,8) for mounting the shaft (4) is a magnetic bearing (30,31,32,33,34), wherein the bearing effect can be intensified, wherein a first bearing (9) and a second bearing (10) are provided for mounting the shaft (4), wherein the first bearing (9) absorbs axial forces, wherein the second bearing (10) absorbs radial forces.

2. Propulsive machine for a body of water (1) according to claim 1, **characterised in that** further connectable magnetic bearings (30,31,32,33,34) are provided for intensifying the bearing effect.

3. Propulsive machine for a body of water (1) according to claim 1 or 2, **characterised in that** different current strengths and/or voltages can be applied to the magnetic bearing (30,31,32,33,34) as a function of the load.

4. Propulsive machine for a body of water (1) according to one of claims 1 to 3, **characterised in that** the magnetic bearing (30,31,32,33,34) is an active bearing which can be controlled and decouples vibrations of the drive shaft.

5. Propulsive machine for a body of water (1) according to one of claims 1 to 4, which has the magnetic bearing (30,31,32,33,34) and a mechanical bearing (35) for mounting the shaft (4).

6. Propulsive machine for a body of water (1) according to one of claims 1 to 5, wherein a transmission (6) is mounted by means of at least one magnetic bearing (30,31,32,33,34).

7. Propulsive machine for a body of water (1) according to one of claims 1 to 6, wherein the shaft (4) is coupled to an electric machine (11).

8. Propulsive machine for a body of water (1) according to claim 6 or 7, wherein the transmission (6) is coupled to the electric machine (11).

9. Propulsive machine for a body of water (1) according to one of claims 1 to 8, wherein the magnetic bearing (30,31,32,33,34) and/or a power converter (24,25,26) of the magnetic bearing is cooled.

10. Propulsive machine for a body of water (1) according to claim 9, wherein the cooling system of the magnetic bearing (30,31,32,33,34) and/or a power converter (24,25,26) of the magnetic bearing is thermally coupled to the cooling system of the electric machine (11) and/or to the cooling system of the power converter (24,25,26) for the electric machine (11).

11. Propulsive machine for a body of water (1) according to one of claims 1 to 10, wherein the magnetic bearing (30,31,32,33,34) has a superconductor (29).

12. Propulsive machine for a body of water (1) according to one of claims 1 to 11, wherein the housing (27) is a pod drive (40) .

13. Propulsive machine for a body of water (1) according to one of claims 1 to 11, wherein the housing (27) is a pressure hull (41).

## Revendications

1. Machine propulsive pour une pièce (1) d'eau, comprenant une hélice (3) et un arbre (4), qui est accouplé à l'hélice (3), l'hélice (3) pouvant être entraînée au moyen d'une machine (5) électrique dans un carter (2), l'arbre (4) étant monté à l'intérieur du carter (2) d'un entraînement (27) à nacelle, un palier (7, 8) de montage de l'arbre (4) étant un palier (30, 31, 32, 33, 34) magnétique, l'effet de palier pouvant être renforcé, dans laquelle il est prévu, pour le montage de l'arbre (4), un premier palier (9) et un deuxième palier (10), le premier palier (9) absorbant des forces axiales, tandis que le deuxième palier (10) absorbe des forces radiales.

2. Machine propulsive pour une pièce (1) d'eau suivant la revendication 1, **caractérisée en ce que**, pour renforcer l'effet de palier, sont prévus d'autres paliers (30, 31, 32, 33, 34) magnétiques pouvant être branchés.

3. Machine propulsive pour une pièce (1) d'eau suivant la revendication 1 ou 2, **caractérisée en ce que** le palier (30, 31, 32, 33, 34) magnétique peut être soumis en fonction de la charge à des intensités de courant et/ou à des tensions différentes.

4. Machine propulsive pour une pièce (1) d'eau suivant l'une des revendications 1 à 3, **caractérisée en ce que** le palier (30, 31, 32, 33, 34) magnétique est un palier actif, qui est réglable et découplé des oscillations de l'arbre d'entraînement.

5. Machine propulsive pour une pièce (1) d'eau suivant l'une des revendications 1 à 4, qui a pour le montage de l'arbre (4) le palier (30, 31, 32, 33, 34) magnétique et un palier (35) mécanique.

6. Machine propulsive pour une pièce (1) d'eau suivant l'une des revendications 1 à 5, dans lequel une transmission (6) est montée au moyen d'au moins un palier (30, 31, 32, 33, 34) magnétique.

7. Machine propulsive pour une pièce (1) d'eau suivant l'une des revendications 1 à 6, dans laquelle l'arbre (4) est accouplé à une machine (11) électrique.

8. Machine propulsive pour une pièce (1) d'eau suivant la revendication 6 ou 7, dans laquelle la transmission (6) est accouplée à la machine (11) électrique.

9. Machine propulsive pour une pièce (1) d'eau suivant l'une des revendications 1 à 8, dans laquelle le palier (30, 31, 32, 33, 34) magnétique et/ou un convertisseur (24, 25, 26) du palier magnétique est refroidi.

10. Machine propulsive pour une pièce (1) d'eau suivant la revendication 9, dans laquelle le refroidissement du palier (30, 31, 32, 33, 34, 61) magnétique et/ou un convertisseur (24, 25, 26) du palier magnétique est couplé thermiquement au refroidissement de la machine (11) électrique et/ou au refroidissement du convertisseur (4, 25, 26, 56), notamment pour la machine (11) électrique.

11. Machine propulsive pour une pièce (1) d'eau suivant l'une des revendications 1 à 10, dans laquelle le palier (30, 31, 32, 33, 34) magnétique a un supraconducteur (29).

12. Machine propulsive pour une pièce (1) d'eau suivant l'une des revendications 1 à 11, dans laquelle le carter (27) est un entraînement (40) à nacelle.

13. Machine propulsive pour une pièce (1) d'eau suivant l'une des revendications 1 à 11, dans laquelle le carter (27) est un corps (41) résistant à la pression.
